# EUROPEAN PATENT APPLICATION

(11) **EP 4 749 956 A1**
(43) Date of publication of application: **27.05.2026**
(21) Application number: 24215364.1
(22) Date of filing: 26.11.2024
(51) Int. Cl.: H04B 17/00, H04B 17/29, H04B 17/391

(54) **A TEST SYSTEM FOR TESTING A JCAS-DUT**

(71) Applicant: Rohde & Schwarz GmbH & Co. KG, 81671 München (DE)
(72) Inventor: Dierks, Stefan, Dr., 83022 Rosenheim (DE); Stein, Manuel, Dr., 81373 Munich (DE); Rajih, Myriam, Dr., 85521 Ottobrunn (DE); Baccouche, Bessem, Dr., 85604 Zorneding (DE)
(74) Representative: Rupp, Christian

(57) **Abstract**

The disclosure relates to a test system for testing a JCAS-DUT (23) comprising a first subsystem (10) configured to transmit at least one first JCAS signal into an environment, receive at least one second JCAS signal from the environment, receive at least one sensing information from the environment, and generate at least one channel and environment parameter based on the at least one first JCAS signal, the at least one second JCAS signal, and the sensing information. The test system comprises a second subsystem (20) which is communicatively coupled to the first subsystem (10), wherein the second subsystem is configured to: receive the at least one channel and environment parameter from the first subsystem (10), generate at least one signal waveform, adapt the at least one signal waveform according to the at least one channel and environment parameter and transmit the adapted signal waveform to the JCAS-DUT (23), receive at least one communication and sensing information output by the JCAS-DUT (23) in response to the adapted signal waveform, and generate at least one performance information based on said at least one communication and sensing information.

## Description

### TECHNICAL FIELD

The present disclosure relates to testing of wireless communication devices. In particular, the disclosure relates to a system and a method for testing a joint communication and sensing capable device under test.

### BACKGROUND

Joint Communication and Sensing (JCAS) - also called Integrated Communication and Sensing (ICAS) - refers to the integration of communication and sensing capabilities within a single system. Unlike traditional communication systems focused solely on data transmission, JCAS can leverage the high-frequency millimeter-wave (mmWave) bands and the ultra-low latency of 5G/6G to enable precise location tracking, object detection, and environmental mapping. For example, a JCAS capable base station (BS) can measure its distance to a user equipment (UE) during a data transmission.

With the introduction of this new technology, there is a great need to test JCAS-enabled devices under realistic conditions with regards to their communication and sensing capabilities.

### SUMMARY

Thus, it is an objective to provide a system and a method for efficiently testing a JCAS device under test (JCAS-DUT) under realistic conductions.

The objective is achieved by the solution provided in the enclosed independent claims. Advantageous implementations of the present disclosure are further defined in the dependent claims.

According to a first aspect, the present disclosure relates to a test system for testing a joint communication and sensing device under test (JCAS-DUT). The test system comprises a first subsystem configured to: transmit at least one first JCAS signal into an environment, receive at least one second JCAS signal from the environment, receive at least one sensing information from the environment, and generate at least one channel and environment parameter based on the at least one first JCAS signal, the at least one second JCAS signal, and the sensing information. The test system further comprises a second subsystem which is communicatively coupled to the first subsystem, and which is configured to: receive the at least one channel and environment parameter from the first subsystem, generate at least one signal waveform, adapt the at least one signal waveform according to the at least one channel and environment parameter and transmit the adapted signal waveform to the JCAS-DUT, receive at least one communication and sensing information output by the JCAS-DUT in response to the adapted signal waveform, and generate at least one performance information based on said at least one communication and sensing information.

This achieves the advantage that the JCAS-DUT can be tested under realistic conditions based on information gathered from a real world environment.

The first subsystem and the second subsystem can be formed by physically separate devices or apparatuses, which can be communicatively connected to exchange data. For example, the first subsystem is a field system, e.g. a field probe, and the second subsystem is a lab system.

A JCAS signal can be a communication signal which can also be used for sensing by a JCAS enabled device. A JCAS signal can be a signal according to a 5G and/or 6G communication standard.

For instance, the the first subsystem is configured to generate the at least one channel and environment parameter by extracting the parameter from the at least one first JCAS signal, the at least one second JCAS signal, and the sensing information.

The JCAS-DUT can be a mobile communication device, a base radio station, an automotive radar system, and/or a drone-radar system.

The second subsystem can comprise a signal generator or signal generator module which is configured to generate the at least one signal waveform. The second subsystem can further comprise a signal adaption module which is configured to adapt the at least one signal waveform based on the least at one channel and environment parameter and transmit the adapted signal waveform to the JCAS-DUT.

The JCAS-DUT can be configured to receive the at least one adapted signal waveform (e.g., a processed JCAS signal), output at least one communication and sensing information extracted from the received adapted signal waveform.

In an implementation form, the at least one performance information is a bit-error rate (BER) and/or a packet-error rate (PER) .

In an implementation form, the at least one performance information is a root-mean-square error (RMSE) of an object distance and/or an object velocity and/or an object size.

In an implementation form, the first subsystem comprises: a transmitter configured to transmit the at least one first JCAS signal into the environment, a receiver configured to receive the at least one second JCAS signal from the environment, and/or a sensor configured to receive the at least one sensing information from the environment.

In an implementation form, the first subsystem further comprises a clock signal generator configured to generate a joint time reference for synchronizing the transmitter, the sensor, and the receiver. This achieves the advantage that the transmitter, receiver and sensor and thus data transmitted respectively received by these devices can be synchronized.

In an implementation form, the first subsystem further comprises a channel and environment training module configured to convert the at least one channel and environment parameter into at least one training parameter.

For instance, by means of the training parameters a neural network of the test system can be trained to generate synthetic channel and environment parameters which can be transmitted to the second subsystem and used by the second subsystem to adapt the signal waveform.

In an implementation form, the channel and environment training module is configured to execute a statistical inference algorithm and/or an artificial-intelligence algorithm to generate the at least one training parameter.

The statistical inference algorithm can be a maximum-likelihood estimator and/or the artificial-intelligence algorithm can be a backpropagation algorithm for a neural network architecture.

In an implementation form, the first subsystem further comprises a channel and environment generation module configured to generate the at least one channel and environment parameter based on a mathematical model defined by the at least one training parameter.

In an implementation form, the channel and environment generation module is configured to execute a probabilistic sampling algorithm and/or an artificial-intelligence algorithm to generate the at least one channel and environment parameter.

The probabilistic sampling algorithm can be an inverse transform sampling algorithm and/or the artificial-intelligence algorithm can be an algorithm for a trained generative neural network.

In an implementation form, the first subsystem further comprises at least one channel and environment parameter extraction module configured to compute the at least one channel and environment parameter based on the at least one first JCAS signal, the at least one second JCAS signal, and the at least one sensing information.

In an implementation form, the second subsystem further comprises a control module configured to control the second subsystem, in particular components of the second subsystem, based on the at least one channel and environment parameter.

In an implementation form, the second subsystem further comprises: an analyzer configured to receive the at least one communication and sensing information output by the JCAS-DUT and to generate the at least one performance information based on said at least one communication and sensing information.

In an implementation form, the analyzer is configured to further receive a communication and sensing information reference, and to generate the at least one performance information based on a comparison of the communication and sensing information output from the JCAS-DUT and the communication and sensing information reference.

In an implementation form, the analyzer comprises a performance evaluation module configured to compute at least one statistical measure characterizing the performance information based on the communication and sensing information and on the received communication and sensing information reference.

In an implementation form, the second subsystem comprises a channel emulator and/or an echo signal generator which is configured to adapt the at least one signal waveform according to the at least one channel and environment parameter and to transmit the adapted signal waveform to the JCAS-DUT.

For example, the channel emulator and/or the echo signal generator are configured to: receive the generated at least one JCAS signal from the signal generator, receive the at least one channel and environment parameter, process the received at least one JCAS signal according to the received at least one channel and environment parameter, and forward the processed at least one JCAS signal to the JCAS-DUT.

In an implementation form, the channel emulator and/or the echo signal generator comprise: an analog-to-digital converter (ADC), a digital processing unit and/or a digital-to-analog converter (DAC) .

In an implementation form, the channel emulator is configured to add at least one channel effect of an artificial communication channel to the at least one signal waveform. This achieves the advantage that the JCAS-DUT can be tested under realistic conditions, taking into account channel effects.

In an implementation form, the channel effect comprises at least one of: a delay, an attenuation, a Doppler effect, a multipath propagation, a filtering, an interference signal, and a noise. This achieves the advantage that the JCAS-DUT can be tested under realistic conditions, taking into account various channel effects.

In an implementation form, the echo signal generator is configured to add at least one signal propagation effect of an artificial environment to the at least one signal waveform. This achieves the advantage that the JCAS-DUT performance can be tested in different simulated environments.

In an implementation form, the at least one signal propagation effect comprises at least one reflected signal from at least one object, wherein the at least one object has an individually variable distance, radial velocity and/or object size.

According to a second aspect, the present disclosure relates to a method for testing a joint communication and sensing device under test (JCAS-DUT). The method comprises the steps of: transmitting at least one first JCAS signal into an environment; receiving at least one second JCAS signal from the environment; receiving at least one sensing information from the environment; generating at least one channel and environment parameter based on the at least one first JCAS signal, the at least one second JCAS signal, and the sensing information; generating at least one signal waveform; adapting the at least one signal waveform according to the at least one channel and environment parameter; transmitting the adapted signal waveform to the JCAS-DUT; receiving the at least one communication and sensing information output by the JCAS-DUT in response to the adapted signal waveform; and generating at least one performance information based on said at least one communication and sensing information.

The steps of the method can be carried out by two subsystems, e.g. two physically separate devices or apparatuses. A first subsystem can carry out the steps of: transmitting the at least one first JCAS signal, receiving the at least one second JCAS signal, receiving the at least one sensing information, and generating at least one channel and environment parameter. A second subsystem, which is communicatively coupled to the first subsystem, can receive the at least one channel and environment parameter from the first subsystem and can carry out the steps of: generating the at least one signal waveform, adapting the at least one signal waveform, transmitting the adapted signal waveform to the JCAS-DUT, receiving the at least one communication and sensing information output by the JCAS-DUT, and generating the at least one performance information.

The above descriptions with regard to the test system according to the first aspect of the disclosure is correspondingly valid for the method according to the second aspect of the disclosure.

The method according to the second aspect of the disclosure can be carried out by the test system according to the first aspect of the disclosure.

### BRIEF DESCRIPTION OF THE DRAWINGS

The above-described aspects and implementations are explained in the following description of embodiments with respect to the enclosed drawings:
- Fig. 1: shows a schematic diagram of a test system for testing a JCAS-DUT according to an embodiment;
- Fig. 2: shows a schematic diagram of a test system for testing a JCAS-DUT according to an embodiment;
- Fig. 3: shows schematic diagrams of components of a subsystem of a test system according to an embodiment;
- Fig. 4: shows a schematic diagram of components a subsystem of a test system according to an embodiment; and
- Fig. 5: shows a flow diagram of a method for testing a JCAS-DUT according to an embodiment. DETAILED DESCRIPTION OF EMBODIMENT

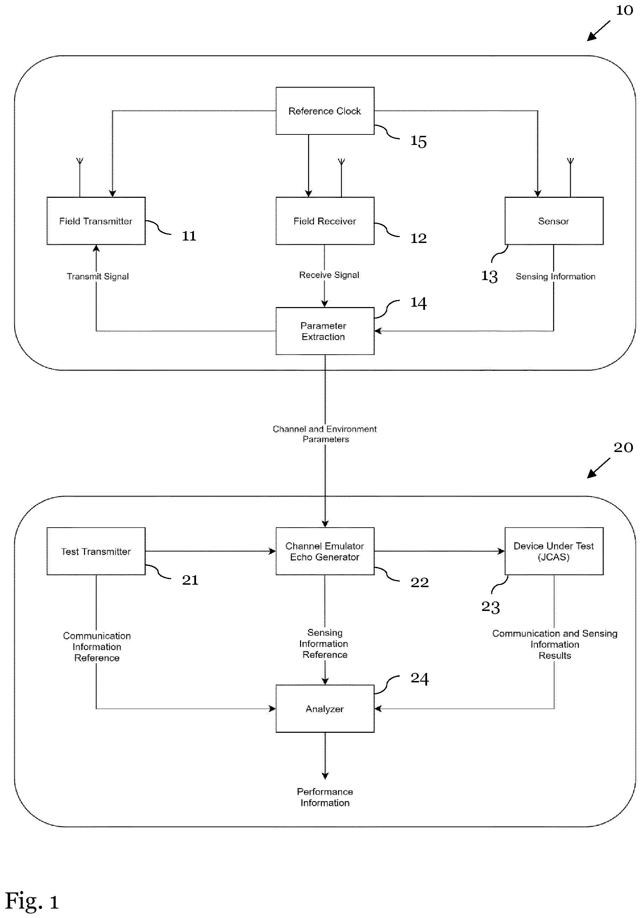

Fig. 1 shows a schematic diagram of a test system for testing a JCAS-DUT 23 according to an embodiment. The test system comprises a first subsystem 10 and a second subsystem 20.

The first subsystem 10 is configured to: transmit at least one first JCAS signal into an environment, receive at least one second JCAS signal from the environment, receive at least one sensing information from the environment, and generate at least one channel and environment parameter based on the at least one first JCAS signal, the at least one second JCAS signal, and the sensing information.

The second subsystem 20 is configured to: receive the at least one channel and environment parameter from the first subsystem 10, generate at least one signal waveform, adapt the at least one signal waveform according to the at least one channel and environment parameter and transmit the adapted signal waveform to the JCAS-DUT 23, receive at least one communication and sensing information output by the JCAS-DUT 23 in response to the adapted signal waveform, and generate at least one performance information based on said at least one communication and sensing information.

For example, the first subsystem 10 comprises: a transmitter 11 configured to transmit the at least one first JCAS signal into the environment, a receiver 12 configured to receive the at least one second JCAS signal from the environment, and/or a sensor 13 configured to receive the at least one sensing information from the environment.

The second subsystem 20 may comprise: a signal generator 21 configured to generate the at least one signal waveform, a signal adaption module 22 configured to adapt the at least one signal waveform according to the at least one channel and environment parameter and to transmit the adapted signal waveform to the JCAS-DUT 23, and/or an analyzer 24 configured to receive at least one communication and sensing information output by the JCAS-DUT 23 in response to the adapted signal waveform. The analyzer 24 can be configured to generate at least one performance information based on said at least one communication and sensing information.

The first subsystem 10 can be a field system or a measurement system, e.g. a field probe, which gathers JCAS signals and sensing information from a real-world environment, such as a road network in a city or an interior of a building and extracts channel and environment parameters from said signals/information.

The second subsystem 20 can be a lab system that is used in a testing environment to test the JCAS capabilities of the DUT 23, in particular the response of the DUT 23 to a test signal. The second subsystem 20 can utilize the channel and environment parameters gathered with the first subsystem 10 in order to create realistic test signals (i.e., the adapted signal waveforms) for testing the DUT 23. In an example, the second subsystem is at least in part a virtual system (e.g., based on Matlab or Python). By means of the second subsystem, a lab environment for the development, evaluation, and verification of JCAS/ICAS capable devices, modules, or applications can be created.

The first subsystem 10 and the second subsystem 20 can be formed by physically separate devices or apparatuses, which can be communicatively connected to exchange data. For example, the first subsystem 10 is a first apparatus and the second subsystem 20 is a second apparatus.

For instance, the first and the second subsystem 10, 20 comprise respective communication interfaces, e.g. wireless or wire bound, via which they are communicatively connected with each other. In this way, the field system (first subsystem 10) can provide information input to the lab system (second subsystem 20) for testing the JCAS-DUT 23.

For example, the first subsystem 10 allows to extract required information (i.e., the channel and environment parameters) which can be used to simulate communication channels together with their associated environments by the second subsystem 20. In particular, the information extracted by the first subsystem 10 can be used to evaluate the communication and sensing performance of the DUT 23 when the communications channels together with their associated environment are simulated by the second subsystem 20. In this sway, the evaluated performances in the lab can resemble the performances achieved in the field.

A JCAS signal can be a communication signal which can also be used for sensing by a JCAS enabled device, e.g. a signal according to a 5G and/or 6G communication standard.

For example, the first JCAS signal, the second JCAS signal and the signal waveform can be signals in a frequency and bandwidth range which is suitable for communication and radar measurements.

The JCAS-DUT 23 can be a mobile communication device, a base radio station (BS), an automotive radar system, and/or a drone-radar system. The JCAS-DUT 23 can also be a multi-static radar system under test that comprises a transmitter and a receiver which are arranged at separated locations (e.g., a base station which transmits signals and a receiver on a vehicle which receives echoes and/or reflections of these signals). The JCAS DUT 23 can be capable of distinguishing between different environments (e.g. outdoor and indoor) based on received signals.

The JCAS-DUT 23 can be configured to receive the at least one adapted signal waveform (e.g., a processed JCAS signal), and extract at least one communication and sensing information from this signal waveform.

The transmitter 11 of the first subsystem 10 can comprise at least one radio transmitter (Tx). The at least one radio transmitter can convert digital signals into physical radio waves.

The receiver 12 of the first subsystem 10 can comprise at least one radio receiver (Rx). For example, the at least one radio receiver receives over-the-air communications, the transmitted (first JCAS) signal as well as an available environmental spectrum. The at least one radio receiver can be configured to convert received physical radio waves into digital signals.

The sensor 13 of the first subsystem 10 can comprise at least one sensor device, such as a RADAR sensor, a LIDAR sensor and/or an ultrasound ranger. The sensor devices can emit radio, light or sound waves and convert the respective physical received response signals into digital measurement data streams (i.e., the sensing information). For instance, the sensor 13 can collect various sensing information, such as position, velocity and/or orientation of objects in the environment.

Each of the transmitter, receiver and sensor 11, 12, 13 can comprise one or more antennas.

The first subsystem 10 may further comprise a clock signal generator 15 which is configured to generate a joint time reference for synchronizing the transmitter 11, sensor 13 and receiver 12. The clock signal generator 15 can comprise a joint time reference clock.

Furthermore, the first subsystem 10 may comprise at least one channel and environment parameter extraction module 14. This extraction module 14 can be configured to compute the at least one channel and environment parameter based on the at least one first JCAS signal, the at least one second JCAS signal, and/or the at least one sensing information. These extracted parameters can then be forwarded by the first subsystem 10 to the second subsystem 20, e.g. via a communication interface.

The signal adaption module 22 of the second subsystem 20 can comprise a channel emulator and/or an echo signal generator which can adapt the signal waveform based on simulated channel effects and/or reflections. In this way, different channel and/or environmental scenarios for testing the DUT 23 can be generated.

The channel emulator, e.g. a communication channel emulator, can be configured to add at least one channel effect of an artificial communication channel to the at least one signal waveform. The channel effect can comprise: a delay, an attenuation, a Doppler effect, a multipath propagation, a filtering, an interference signal, and/or a noise.

The echo signal generator can be configured to add at least one signal propagation effect of an artificial environment to the at least one signal waveform. The at least one signal propagation effect may comprise at least one reflected signal from at least one object, wherein the at least one object has an individually variable distance, radial velocity and/or object size.

The signal generator 21 can comprise a test transmitter 21 for transmitting the signal waveform.

The analyzer 24 can be configured to receive the communication and sensing information from the JCAS-DUT 23, and additionally, to receive a communication and sensing information reference, e.g. from the signal generator 21 and/or from the signal adaption module 22. The analyzer 24 can be configured to generate the at least one performance information based on a comparison of the communication and sensing information and the communication and sensing information reference. For instance, the analyzer 24 performs a channel sounding of the joint communication and sensing channel.

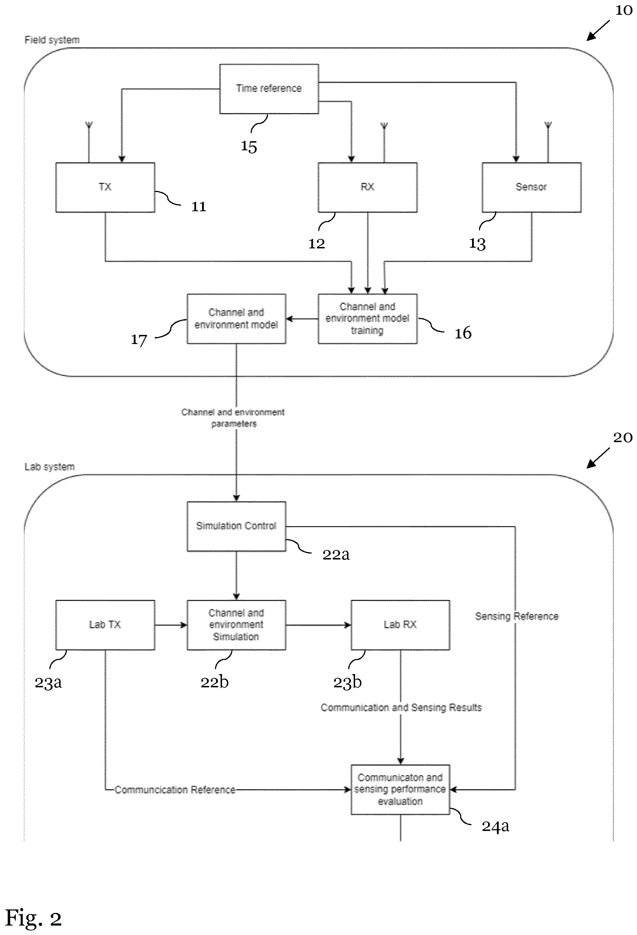

Figs 2 to 4 show exemplary embodiments of the test system or components thereof, which build on the test system shown in Fig. 1. Same elements are labelled with the same reference signs. Hereinafter, only the differences between Fig. 1 and Figs. 2 to 4 are explained.

In the exemplary embodiment of the test system shown in Fig. 2, the first subsystem 10 further comprises a channel and environment training module 16. The training module 16 can be configured to convert the at least one channel and environment parameter, which is e.g. provided by the parameter extraction module 14 (not shown in Fig. 2), into at least one training parameter.

In addition or alternatively, the channel and environment training module 16 can be fed with the transmitted and received JCAS signals, as well as the sensing information from the transmitter 11, receiver 12 and sensor 13 (as indicated in Fig. 2). These signals and information can be used to train a neural network of the test system which models communication and environment channels. The scenarios used for training can reflect both the channel properties and the environment (number of objects present, their position, velocity, properties/materials etc.).

The channel and environment training module 16 can be configured to execute a statistical inference algorithm and/or an artificial-intelligence algorithm to generate the at least one training parameter. For example, the statistical inference algorithm is a maximum-likelihood estimator and/or the artificial-intelligence algorithm is a backpropagation algorithm for a neural network architecture.

The at least one training parameter, which is provided by the training module 16, can be forwarded to a channel and environment generation module 17. The channel and environment generation module 17 can be an AI/ML application, such as a generative neural network. The neural network can be trained by the training parameter and can generate at least one channel and environment model based in part on said training. For instance, the channel and environment generation module 17 is configured to execute a probabilistic sampling algorithm and/or an artificial-intelligence algorithm.

Once trained, the channel and environment generation module 17 can generate realizations of a chosen channel and environment scenario, e.g., based on channel and environment parameters that define a given scenario chosen by the user. For example, in a factory setup, one scenario can be defined by a moving robot (radio receiver) with a predefined path (positions and velocity) with respect to the transmitter (fixed machine), and one person in the line of sight between the machine and the robot.

In an example, the at least one channel and environment parameter which is forwarded to the second subsystem 20 is extracted from the channel and environment model that is generated by the neural network. In addition or alternatively, the at least one channel and environment parameter can be extracted from the at least one first JCAS signal, the at least one second JCAS signal e.g. using the parameter extraction module 14 as shown in Fig. 1.

The second subsystem 20 can comprise a control module 22a, e.g. in the form of a simulation controller, which is configured to coordinate the components of the second subsystem 20, based on the at least one channel and environment parameter.

For example, the control module 22a can control the signal adaption module 22, which can be configured as a channel and/or environment simulation device 22b. In particular, the control module 22a selects suitable settings for a channel and environment simulation and provides reference sensing information to a communication and sensing performance evaluation module 24a. In its simplest form the settings can be a selector between two simulation scenarios (e.g. room A and room B). In a more advanced lab system 20 the control module 22a settings might for example correspond to the trajectories of objects in a simulated environment.

The performance evaluation module 24a can be a component of the analyzer 24 and can be configured to compute at least one statistical measure characterizing the performance information based on the communication and sensing information and on a received communication and sensing information reference.

The channel and environment simulation device 22b can emulate radio channels based on settings provided by the control module 22a and based on the channel and environment parameters received from the first subsystem 10. A channel emulation may comprise the generation of a signal for a lab receiver 23b based on a signal from a lab transmitter 23a. This can for example be achieved via linear filtering (with channel impulse response) or by passing signals through neural networks. In addition or alternatively, the channel and environment simulation device 22b can emulate an environment surrounding the lab transmitter and/or receiver 23a, 23b, e.g., based on settings of the simulation control unit 22a and the environment parameters. Certain parameters of the simulated environment can be forwarded to the evaluation module 24a as sensing reference.

The lab receiver 23b and the lab transmitter 23a can be components of the JCAS-DUT 23, e.g. if the JCAS-DUT 23 is a multi-static radar system under test which comprises a transmitter which transmits radar signals and a receiver which receives reflections and/or echoes of said radar signals. However, it is also possible that the lab receiver 23a is a component of the second subsystem 20 and only the lab transmitter 23a is a component of the JCAS-DUT 23, or vice versa.

The lab transmitter 23a can generate signals based on coded information and pass them to the channel and environment simulation device 22b. The coded information can then be forwarded to the communication and sensing performance evaluation module 24a as communication reference. The lab receiver 23b can obtain signals from the channel and environment simulation device 22b and extract coded information and certain environmental parameters from these signals. The coded information and the calculated environmental parameters can then be forwarded to the communication and sensing performance evaluation module 24a as communication and sensing results.

The communication and sensing performance evaluation module 24a can receive the communication reference and a communication result based on which it can calculate and output a communication performance metric. A performance metric can for example be the bit error rate (BER) or the packet error rate (PER). In addition or alternatively, the communication and sensing performance evaluation module 24a can receive a sensing reference and a sensing result based on which it can calculate and output a sensing performance metric. A performance metric can for example be the root-mean-square error (RMSE) of object distance, velocity, size and/or position (e.g., in 3d space), or the detection/classification rate of the particular environment.

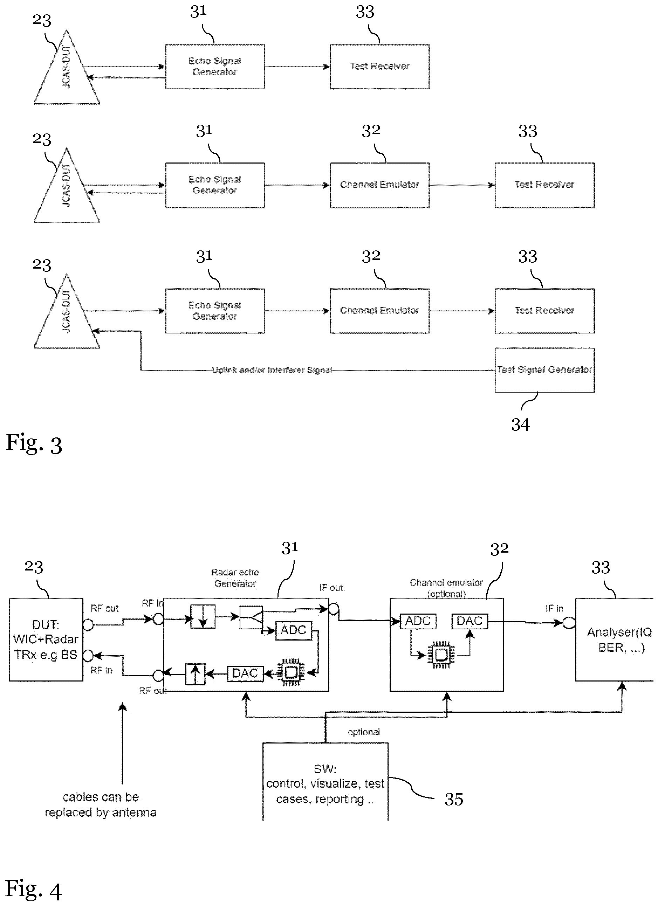

Fig 3 shows schematic diagrams of components of the second subsystem 20 according to an embodiment.

The upper diagram of the Fig. 3 shows an example, where the signal adaption module is formed by an echo signal generator 31 which is connected between the DUT 23 and a test receiver 33 (which can be a component of the analyzer 24 or can be switched in front of the analyzer 24). For example, the echo signal generator 31 is an automotive radar echo generator.

The echo signal generator 31 can comprise a digital transceiver (e.g. a broadband transceiver up to 4 GHz). The echo signal generator 31 can receive a downlink signal from the JCAS-DUT 23 (e.g., a BS downlink signal) and downconvert this signal to a baseband signal. The echo signal generator 31 can further generate a baseband delay of the received signal.

The echo signal generator 31 can then upconvert the baseband signal and send it back to the DUT 23 as an "echo". The baseband signal can further be forwarded to the test receiver 33. In principle, the echo signal generator 31 could also skip the downconversion of the signal and forward the received downlink signal.

The middle diagram of Fig. 3, shows a further example where an additional channel emulator 32, e.g. a communication channel emulator, is coupled between the echo signal generator 31 and the test receiver 33. In an example, the channel emulator adds an artificial channel effect to a signal that is forwarded to the test receiver 33. The channel effect can comprise a delay, an attenuation, a Doppler effect, a multipath propagation, and/or a reflection. In principle, some channel effects could also be added by the echo signal generator 31 and the channel emulator 32 could be omitted.

The test receiver 33 can comprise a spectrum analyzer which operates as a communication receiver. For instance, the spectrum analyzer is capable of carrying out EVM (error vector magnitude) measurements. The spectrum analyzer can test whether the DUT meets required specifications (e.g., by testing the "reserve" of a Tx signal from the DUT 23 until it can no longer be decoded).

In the bottom diagram of Fig. 3, the exemplary subsystem 20 further comprises a test signal generator 34. The test signal generator 34 can be configured to generate a test uplink and/or interferer signal which interferes with the echo signal or with the test uplink signal and to forward this signal to the DUT 23. For instance, the DUT 23 is a multi-static radar system under test and comprises multiple spatially diverse radar transmitters and receivers. The test uplink and/or interferer signal can be generated based on a received signal from the DUT 23.

For example, the echo signal generator 31 and/or the channel emulator 32 adapt signals based on different test scenarios. The test scenarios can comprise SISO, MISO, SIMO, and MIMO scenarios.

Fig. 4 shows a schematic diagram of components the second subsystem 20 according to an embodiment.

In particular, Fig. 4 shows an example where the second subsystem 20 comprises a radar echo generator 31, a channel emulator 32 and a test receiver 33 in the form of an analyzer. These components 31, 32, 33 can be controlled by a control software 35. For instance, the control software 35 can be executed by the control module 22a.

As shown in Fig. 4, the channel emulator 31 and/or the echo signal generator 32 can comprise at least one analog-to-digital converter (ADC), a digital processing unit and/or at least one digital-to-analog converter (DAC).

The test system can be used to measure single KPIs (key performance indicators) of the DUT 23. The test system can form a HIL (hardware-in-the-loop) system which is capable of simulating complex scenarios. The test system can be a test and measurement system.

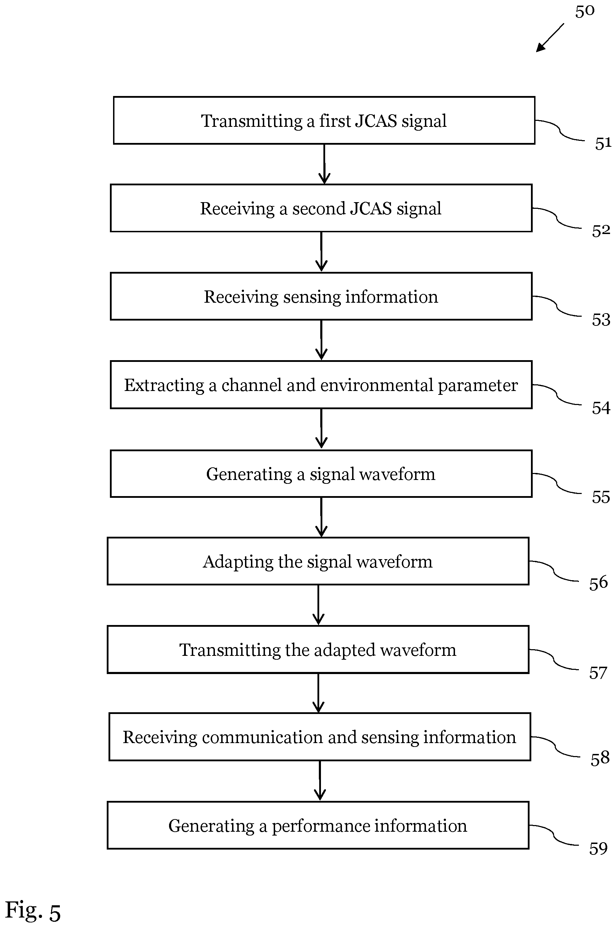

Fig. 5 shows a flow diagram of a method 50 for testing the JCAS-DUT 23 according to an embodiment. The method 50 comprises the following steps: transmitting 51 the at least one first JCAS signal into an environment; receiving 52 the at least one second JCAS signal from the environment; receiving 53 the at least one sensing information from the environment; generating 54 the at least one channel and environment parameter based on the at least one first JCAS signal, the at least one second JCAS signal, and the sensing information; generating 55 the at least one signal waveform; adapting 56 the at least one signal waveform according to the at least one channel and environment parameter; transmitting 57 the adapted signal waveform to the JCAS-DUT; receiving 58 the at least one communication and sensing information output by the JCAS-DUT in response to the adapted signal waveform; and generating 59 the at least one performance information based on said at least one communication and sensing information.

The method 50 can be carried out a test system as shown in any one of Figs. 1-4. For example, the first subsystem 10 can be configured to carry out steps 51-54 and the second subsystem 20 can be configured to carry out steps 55-59.

While various embodiments of the present disclosure have been described above, it should be understood that they have been presented by way of example only, and not limitation. Numerous changes to the disclosed embodiments can be made in accordance with the disclosure herein, without departing from the spirit or scope of the disclosure. Thus, the breadth and scope of the present disclosure should not be limited by any of the above-described embodiments. Rather, the scope of the disclosure should be defined in accordance with the following claims and their equivalents.

Although the disclosed embodiments have been illustrated and described with respect to one or more implementations, equivalent alterations and modifications will occur or be known to others skilled in the art upon the reading and understanding of this specification and the annexed drawings. In addition, while a particular feature of the present disclosure may have been disclosed with respect to only one of several implementations, such feature may be combined with one or more other features of the other implementations as may be desired and advantageous for any given or particular application.

## Claims

1. A test system for testing a joint communication and sensing device under test, JCAS-DUT (23), the test system comprising:
a first subsystem (10) configured to:
- transmit at least one first JCAS signal into an environment,
- receive at least one second JCAS signal from the environment,
- receive at least one sensing information from the environment, and
- generate at least one channel and environment parameter based on the at least one first JCAS signal, the at least one second JCAS signal, and the sensing information; and
a second subsystem (20) which is communicatively coupled to the first subsystem (10), wherein the second subsystem (20) is configured to:
- receive the at least one channel and environment parameter from the first subsystem (10),
- generate at least one signal waveform,
- adapt the at least one signal waveform according to the at least one channel and environment parameter and transmit the adapted signal waveform to the JCAS-DUT (23),
- receive at least one communication and sensing information output by the JCAS-DUT (23) in response to the adapted signal waveform, and
- generate at least one performance information based on said at least one communication and sensing information.

2. The test system of claim 1,
wherein the at least one performance information is a bit-error rate, BER, and/or a packet-error rate, PER.

3. The test system of claim 1 or 2,
wherein the at least one performance information is a root-mean-square error, RMSE, of an object distance and/or an object velocity and/or an object size.

4. The test system of any one of the preceding claims,
wherein the first subsystem (10) comprises:
a transmitter (11) configured to transmit the at least one first JCAS signal into the environment,
a receiver (12) configured to receive the at least one second JCAS signal from the environment, and/or
a sensor (13) configured to receive the at least one sensing information from the environment.

5. The test system of claim 4,
wherein the first subsystem (10) further comprises:
a clock signal generator (15) configured to generate a joint time reference for synchronizing the transmitter (11), the sensor (13), and the receiver (12).

6. The test system of any one of the preceding claims,
wherein the first subsystem (10) further comprises:
a channel and environment training module (16) configured to convert the at least one channel and environment parameter into at least one training parameter.

7. The test system of claim 6,
wherein the channel and environment training module (16) is configured to execute a statistical inference algorithm and/or an artificial-intelligence algorithm to generate the at least one training parameter.

8. The test system of claim 6 or 7,
wherein the first subsystem (10) further comprises:
a channel and environment generation module (17) configured to generate the at least one channel and environment parameter based on a mathematical model defined by the at least one training parameter.

9. The test system of claim 8,
wherein the channel and environment generation module (17) is configured to execute a probabilistic sampling algorithm and/or an artificial-intelligence algorithm to generate the at least one channel and environment parameter.

10. The test system of any one of the preceding claims,
wherein the first subsystem (10) further comprises:
at least one channel and environment parameter extraction module (14) configured to compute the at least one channel and environment parameter based on the at least one first JCAS signal, the at least one second JCAS signal, and the at least one sensing information.

11. The test system of any one of the preceding claims,
wherein the second subsystem (20) further comprises:
a control module (22a) configured to control the second subsystem (20), in particular components of the second subsystem (20), based on the at least one channel and environment parameter.

12. The test system of any one of the preceding claims,
wherein the second subsystem (20) further comprises:
an analyzer (24) configured to receive the at least one communication and sensing information output by the JCAS-DUT (23) and to generate the at least one performance information based on said at least one communication and sensing information.

13. The test system of claim 12,
wherein the analyzer (24) is configured to further receive a communication and sensing information reference, and to generate the at least one performance information based on a comparison of the communication and sensing information output from the JCAS-DUT (23) and the communication and sensing information reference.

14. The test system of claim 13,
wherein the analyzer (24) comprises a performance evaluation module configured to compute at least one statistical measure characterizing the performance information based on the communication and sensing information and on the received communication and sensing information reference.

15. The test system of any one of the preceding claims,
wherein the second subsystem (10) further comprises:
a channel emulator (32) and/or an echo signal generator (31) configured to adapt the at least one signal waveform according to the at least one channel and environment parameter and to transmit the adapted signal waveform to the JCAS-DUT (23).

16. The test system of claim 15,
wherein the channel emulator (32) and/or the echo signal generator (31) comprise: an analog-to-digital converter, a digital processing unit and/or a digital-to-analog converter.

17. The test system of claim 15 or 16,
wherein the channel emulator (32) is configured to add at least one channel effect of an artificial communication channel to the at least one signal waveform.

18. The test system of claim 17,
wherein the channel effect comprises at least one of: a delay, an attenuation, a Doppler effect, a multipath propagation, a filtering, an interference signal, and a noise.

19. The test system of any one of claims 15 to 18,
wherein the echo signal generator (31) is configured to add at least one signal propagation effect of an artificial environment to the at least one signal waveform.

20. The test system of claim 19,
wherein the at least one signal propagation effect comprises at least one reflected signal from at least one object, wherein the at least one object has an individually variable distance, radial velocity and/or object size.

21. A method (50) for testing a joint communication and sensing device under test, JCAS-DUT (23), the method (50) comprising:
transmitting (51) at least one first JCAS signal into an environment;
receiving (52) at least one second JCAS signal from the environment;
receiving (53) at least one sensing information from the environment;
generating (54) at least one channel and environment parameter based on the at least one first JCAS signal, the at least one second JCAS signal, and the sensing information;
generating (55) at least one signal waveform;
adapting (56) the at least one signal waveform according to the at least one channel and environment parameter;
transmitting (57) the adapted signal waveform to the JCAS-DUT (23);
receiving (58) the at least one communication and sensing information output by the JCAS-DUT (23) in response to the adapted signal waveform; and
generating (59) at least one performance information based on said at least one communication and sensing information.
